# DEMANDE DE BREVET EUROPEEN

(11) **EP 2 224 672 A1**
(43) Date de publication de la demande: **01.09.2010**
(21) Numéro de dépôt: 10152038.5
(22) Date de dépôt: 29.01.2010
(51) Int. Cl.: H04L 29/06

(54) **Procédé de référencement de capteurs dans un réseau de télécommunication du type IMS**

(30) Priorité: 26.02.2009 FR 0951234
(71) Demandeur: Alcatel Lucent, 75008 Paris (FR)
(72) Inventeur: Outtagarts, Abdelkader, 91620, NOZAY (FR); Marilly, Emmanuel, 91620, NOZAY (FR)
(74) Mandataire: Sciaux, Edmond

(57) **Abrégé**

La présente invention concerne un procédé de référencement de capteurs (116) connectés à un réseau (110) de télécommunication utilisant un protocole du type SIP dans l'architecture IMS, la connexion au réseau (110) requérant la transmission d'une requête (118) d'accès devant être validée par un serveur d'inscription (120), **caractérisé en ce que** la requête (118) d'accès émise par un capteur (116) pour sa connexion au réseau (110) comprend des informations spécifiques codant un identifiant, une localisation et une fonction du capteur (116) de telle sorte que le serveur d'inscription (120) commande le référencement de ce capteur (116) à partir de cet identifiant, de cette localisation et de cette fonction lors de la validation de la connexion du capteur (116) au réseau (110).

## Description

La présente invention concerne un procédé de référencement de capteurs dans un réseau de télécommunication du type IMS.

Il est connu d'utiliser des terminaux connectés à un réseau de télécommunication pour offrir, via ce réseau, des fonctions mises en oeuvre par ces terminaux connectés.

A titre d'exemple, un premier terminal connecté à un réseau peut être, ou comprendre, un capteur effectuant des mesures ou des enregistrements de telle sorte que, en accédant à ce capteur via ce réseau, un second terminal puisse avoir accès aux valeurs mesurées ou aux enregistrements effectués par ce capteur.

A cet effet la société Microsoft Inc, USA, a développé un procédé dénommé « SenseWeb » qui utilise le réseau Internet pour générer une base de données référençant des capteurs connectés au réseau Internet.

Ainsi, ce procédé permet à des utilisateurs du réseau Internet d'avoir accès à un référencement de capteurs connectés à ce réseau Internet pour, éventuellement, utiliser leurs données ou des ressources associées.

Toutefois ce procédé présente de nombreux inconvénients. Notamment, il utilise une interface de programmation, ou API pour « Application Programming Interface » en anglais, confidentielle et spécifique à son développeur - Microsoft Inc - de telle sorte qu'elle ne peut pas être librement utilisée pour générer de nouvelles applications.

De plus un capteur ne peut librement s'inscrire dans cette base de données sans utiliser un procédé d'inscription conforme à cette interface de programmation, ce qui limite le nombre de capteurs pouvant être référencés par ce procédé aux capteurs acceptant l'APl spécifique.

En outre, un tel procédé ne permet pas de connaître l'état - connecté ou déconnecté - en temps réel d'un capteur référencé. De fait, un capteur référencé peut être requis pour une application alors même qu'il n'est plus disponible - par exemple suite à sa désactivation pour maintenance.

Finalement, un tel procédé ne permet de connaître ni le type de capteur - physique, chimique, multimédia, etc - ni la localisation du capteur alors que ces informations sont essentielles pour certaines applications, par exemple en vue de l'établissement d'une carte météorologique à partir de mesures de température effectuées par des capteurs thermiques.

La présente invention vise à résoudre au moins un de ces problèmes. Elle comprend la constatation qu'une architecture du type IMS, pour « Internet Protocol Multimedia Subsystem » en anglais, utilise des procédés standardisés d'accès à un réseau, tel que le protocole SIP pour « Session Initiation Protocol » en anglais, nécessitant la transmission d'une requête de la part d'un terminal souhaitant se connecter à ce réseau. En modifiant une telle requête, il est alors possible de référencer un capteur lors de sa connexion à ce réseau pour offrir ses services, un réseau du type IMS utilisant des protocoles standards IP, pour « Internet Procotol » en anglais.

C'est pourquoi l'invention concerne un procédé de référencement de capteurs connectés à un réseau de télécommunication présentant une architecture du type IMS, la connexion au réseau requérant la transmission d'une requête d'accès devant être validée par un serveur d'inscription, **caractérisé en ce que** la requête d'accès émise par un capteur pour sa connexion au réseau comprend des informations spécifiques codant un identifiant, une localisation et une fonction du capteur de telle sorte que le serveur d'inscription commande le référencement de ce capteur à partir de cet identifiant, de cette localisation et de cette fonction lors de la validation de la connexion du capteur au réseau.

Grâce à l'invention, le référencement d'un capteur peut être simplement et librement effectué par un capteur souhaitant se connecter à un réseau de télécommunication du type IMS. De fait, elle ne requiert au niveau du capteur qu'une transmission d'informations spécifiques dans sa requête d'accès au réseau.

En outre, les protocoles mis en oeuvre dans un réseau du type IMS sont publics et librement disponibles de telle sorte qu'il est possible, pour des tiers, de faire référencer leurs capteurs et/ou de développer des applications à partir du référencement de capteur effectués par le réseau.

De plus, les protocoles d'un réseau du type IMS ne maintiennent la connexion d'un terminal au réseau que lorsque ce dernier est réellement connecté au réseau de telle sorte que, en cas de déconnexion, un capteur n'est plus référencé.

Finalement, l'invention permet de localiser un capteur selon des paramètres tels que sa longitude et sa latitude, ce qui permet une exploitation géographique des mesures/enregistrements fournis.

Dans une réalisation, la requête d'accès émise par le capteur code l'identifiant, la localisation et la fonction du capteur au moyen d'un entête spécifique intégré dans la requête d'accès du capteur.

Selon une réalisation, le serveur d'inscription commande le référencement du capteur en intégrant les informations spécifiques, identifiant le capteur, sa localisation et sa fonction, dans une requête destinée à un serveur de référencement qui gère une liste des capteurs connectés au réseau.

Dans une réalisation, le serveur de référencement transmet la liste des capteurs connectés au réseau à une base de données publique.

Selon une réalisation, le serveur d'inscription valide la connexion du capteur au réseau lorsque le serveur de référencement valide le référencement du capteur.

Dans une réalisation, un serveur de présence contrôle le maintien de la connexion d'un terminal au réseau, un capteur étant supprimé de la liste de référencement si le serveur de présence détecte sa déconnexion du réseau du type IMS.

Selon une réalisation, la localisation d'un capteur est effectuée au moyen de sa latitude et de sa longitude.

L'invention concerne également un capteur comprenant des moyens pour émettre une requête d'inscription dans un réseau du type IMS codant sa fonction et sa localisation selon un procédé conforme à l'une des réalisations précédentes.

L'invention concerne également un serveur d'inscription à un réseau de télécommunication du type IMS destiné à recevoir des requêtes d'accès transmises par des terminaux requérant une connexion au réseau **caractérisé en ce qu**'il comprend des moyens pour identifier dans une requête d'accès émise par un capteur des informations spécifiques codant un identifiant, une localisation et une fonction de ce capteur afin de commander le référencement du capteur selon un procédé conforme à l'une des réalisations précédentes.

Finalement, l'invention concerne également un serveur de référencement de capteurs d'un réseau de télécommunication du type IMS comprenant des moyens pour recevoir une commande de référencement générées par un serveur d'inscription selon un procédé conforme à l'une des réalisations précédentes.

L'invention sera mieux comprise à la lumière de la description effectuée ci-dessous, à titre illustratif et non limitatif, en référence aux figures ci-jointes sur lesquelles :
- la figure 1 est un schéma d'un réseau IMS comprenant un serveur de référencement de capteurs conforme à l'invention,
- la figure 2 est un diagramme représentant la mise en oeuvre du référencement d'un capteur conformément à l'invention, et
- la figure 3 est un schéma fonctionnel des étapes mises en oeuvre dans un réseau IMS conforme à l'invention.

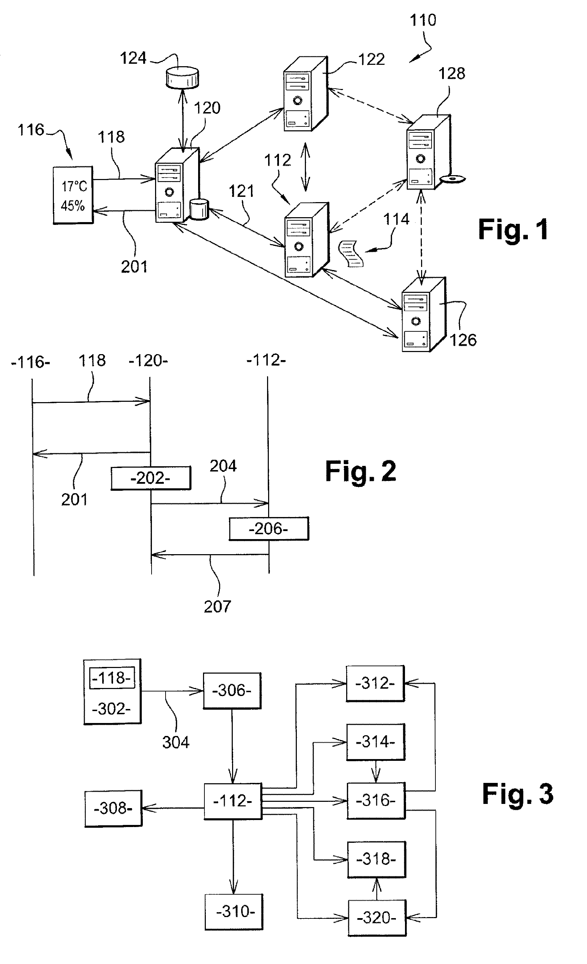

En référence à la figure 1, un réseau IMS 110 conforme à l'invention comprend un serveur 112 de référencement établissant une liste 114 de capteurs 116 disponibles, c'est-à-dire connectés et accessibles, vis-à-vis de ce réseau IMS 110.

En outre, cette liste 114 comprend des informations spécifiques au fonctionnement de chaque capteur 116 telles que, dans cet exemple, sa fonction ou sa nature, par exemple thermique, hydrométrique, physique, chimique, visuelle et/ou audio, et sa localisation géographique.

Pour ce faire, il convient de rappeler que, conformément à une architecture IMS, un terminal s'inscrivant au réseau IMS 110 doit émettre une requête 118 d'inscription. Plus précisément, cette requête 118 est conforme au protocole SIP déjà décrit.

Conformément à l'invention, les requêtes 118 d'accès au réseau IMS 110 émises par un capteur 116 vers un serveur 120 d'inscription au réseau - en l'espèce un serveur S-CSCF en charge des inscriptions, modifications et radiations du réseau IMS 112 - transmettent en outre des informations spécifiques relatives à un identifiant, une localisation et une fonction - ou une nature - du capteur 116.

Cette transmission des informations spécifiques est effectuée dans la requête 118 d'accès du capteur 116 au moyen d'entêtes spécifiques à chacune de ces informations - identité, fonction et localisation.

Plus précisément, un entête « sensor-type » dans la requête permet au serveur 120 d'inscription d'identifier un terminal 116, requérant une connexion au réseau 110, comme un capteur.

C'est pourquoi le serveur 120 utilise un filtre logiciel pour rechercher, dans chaque requête 118 d'inscription, la présence éventuelle de cet entête « sensor-type » propre à un terminal du type capteur 116.

En référence à la figure 2, la requête 118 d'inscription du terminal 116 au serveur 120 d'inscription est suivie, préalablement à son traitement par un filtre 202, par une confirmation 201 de la connexion du capteur 116 au réseau 110.

Toutefois, dans une variante, la connexion du capteur 116 n'est pas effectuée tant que le capteur 116 n'est pas référencé auprès d'un serveur 112 dédié au référencement.

Indépendamment de sa séquence d'utilisation, le filtre logiciel 202, dénommé « filtercriteria » dans les lignes de codes ci-dessous, peut se présenter sous la forme suivante:

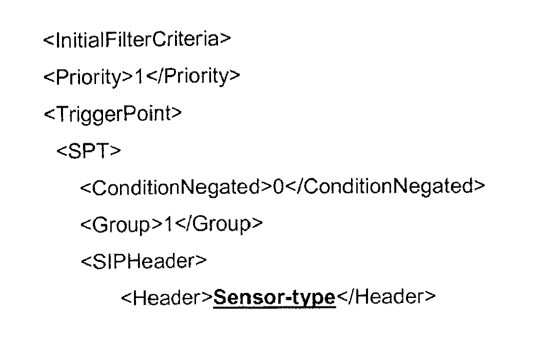

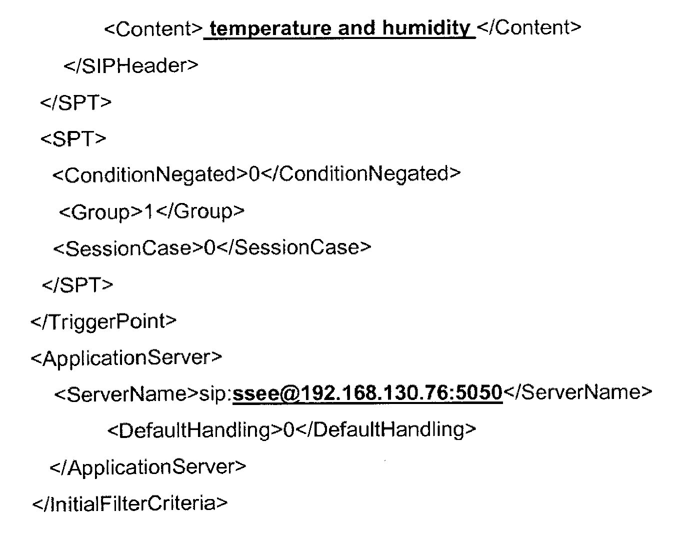

Dans cet exemple, l'entête « Sensor-type » indique la fonction du capteur 116 - mesure de température et d'humidité - qui est mise en relief (en gras et souligné) pour des raisons de clarté. De façon pratique, d'autres codes tels que « chemistry », « pressure », « video » ou « audio » pourraient être utilisés.

La détection d'une requête 118 propre à un capteur 116 déclenche la retransmission 204 (figure 2), à partir du serveur 120 d'inscription, des informations spécifiques reçues - nature et localisation - relatives au capteur et détectées dans la requête d'inscription.

Dans cet exemple, l'adresse à laquelle ces informations spécifiques sont retransmises est codée par son adresse SIP - ssee@192.168.130.76:5050 - puisque les transmissions 121 (figure 1) entre le serveur 120 d'inscription et le serveur 112 de référencement sont effectuées selon ce protocole SIP.

Plus précisément, cette retransmission se présente sous la forme d'une requête de référencement « Register » telle que:

```
      REGISTER sip:ssee.home1.com SIP/2. 0
      Via: SIP/2 . 0/UDP scscfl.homel.com;branch= z9hGr4bK-0-1_8321219513718260
      Max-Forwards: 70
      From: <sip:scscfl.home1.com>;tag=2-0--1-963621852
     To: <sip:sensorA@home1.com>
     Contact: <sip:scscfl.home1.com>;expires=3600
     Call-ID: 03775315
     CSeq: 70 REGISTER
     Content-Length: 0
     Sensor-type: temperature and humidity
     Latitude: 48
     Longitude: 2
```

Cette requête 204 de référencement indique l'adresse du serveur 112 de référencement - « ssee.homel.com » - destinataire de la requête ainsi que l'identité du capteur 116 «sensorA ».

Après traitement 206 de cette requête 204 de référencement, le capteur 116 est identifié dans le serveur 112 de référencement sous son identité « sensorA », notamment pour l'ensemble des communications que ce serveur 112 de référencement peut développer par la suite avec le capteur 116.

Le serveur 112 construit ainsi des listes de capteurs classés par type, par localisation ou par domaine de telle sorte que si un terminal IMS désire lire les données du capteur, il peut initier une session SIP (INVITE) vers ce capteur en utilisant l'adresse publique de ce dernier:
sip :sensorA@home1.com.

```
 INV1TE sip:sensorA@ home1.com SIP/2. 0
 Via: SIP/2 . 0/UDP user1@test.com;branch= z9hG4bK-0-1-8321219513718260
 Max-Forwards: 70
 From: <sip:user1@test.com>;tag=2-0--1-963621852
 To: <sip:sensorA@home1.com>
 Contact: <sip: user1@test.com >;expires=3600
 Call-ID: 08876415
 CSeq: 70 INVITE
 Content-Length: 0
```

Toutefois, le serveur 120 d'inscription indique sa propre adresse sip - « From: sip:scscfl.homel.com » afin que le serveur 112 de référencement établisse par son intermédiaire ses éventuelles communications avec le capteur SensorA.

Après avoir enregistré les informations fournies par la requête de référencement, à savoir une identité, la nature et la localisation du capteur, le serveur 112 de référencement transmet un accusé 207 (figure 2) de référencement au serveur 120 d'inscription par une nouvelle communication 121. Ainsi, le serveur 120 d'inscription peut valider la connexion du capteur 116 au réseau 110 dans une réalisation.

Si le serveur 112 de référencement requiert d'autres informations concernant l'état de référencement du capteur SensorA, il peut également s'enregistrer auprès du serveur 120 d'inscription, ou « third part register » en anglais.

Ainsi, le serveur 112 de référencement peut identifier tous les capteurs grâce à un entête spécifique (sensor-type), la liste de ces capteurs étant publiée dans un serveur 122 (figure 1) de présence.

Un tel serveur 122 de présence maintient notamment à jour l'information sur la disponibilité d'un terminal. Il permet également d'exposer la capacité du terminal et la préférence du mode de communication de l'utilisateur.

Pour chaque capteur 116, le serveur 112 de référencement génère un document XML, identifié par une adresse SIP et comprenant des informations propres au capteur 116 - sa nature, sa localisation via des paramètres telles que sa latitude et sa longitude et/ou une adresse, cette dernière pouvant être automatiquement générée à partir de la latitude et de la longitude et d'une carte.

Le serveur 112 de référencement peut également générer des groupes de capteurs classés, par exemple, par localisation (pays, villes, etc), par nature (température, humidité, caméra, etc), par pertinence (proche d'un monument, d'un zoo, d'un lieu particulier) et/ou par actualité.

Finalement, cette réalisation de l'invention met en oeuvre un serveur 128 (figure 1) de base de données stockant des documents XML, pour eXtensible Markup Language, générés par le serveur 112 de référencement et mis à jour par le serveur 122 de présence.

Dans le cas où un capteur 116 n'est plus disponible, le serveur de présence notifie le serveur 112 qui régénère la liste 114 de capteurs et met à jour une base XDMS du serveur 128.

Ainsi, un utilisateur 126 du réseau IMS 110 peut accéder à la liste de référencement 114 des capteurs 116 du réseau tant via le serveur 112 de référencement que via le serveur 128 de stockage des fichiers XML. Dans ce cas, il convient de noter que les communications effectuées avec le serveur 112 de référencement, comme avec le serveur 120 d'inscription, sont effectuées selon le protocole SIP tandis que les transmissions avec le serveur 128 de données sont effectuées selon un protocole adapté à la transmission de données XML, comme le procotol XCAP pour « X Configuration Access Protocol » en anglais.

En référence à la figure 3, des étapes d'un procédé conforme à l'invention sont représentées de façon schématique :
- Lors d'une étape 302, les entêtes propres aux informations spécifiques d'un capteur - nature et localisation - sont incluses dans une requête 118 d'inscription au réseau IMS,
- Lors d'une étape 304, cette requête 118 est transmise au serveur 120 d'inscription du réseau IMS 110,
- Lors d'une étape 306, le serveur 120 d'inscription retransmet les informations spécifiques au serveur 112 de référencement du réseau IMS 110,
- Lors d'une étape 308, le serveur 112 de référencement souscrit au capteur,
- Lors d'une étape 310, le serveur 112 de référencement extrait les informations spécifiques au capteur - nature et localisation - et souscrit au serveur d'inscription 120,
- Lors d'une étape 312, le serveur 112 de référencement extrait les valeurs contenu dans les entêtes de la requête SIP,
- Lors d'une étape 308, le serveur 112 de référencement permet à un terminal SIP ou IMS d'ajouter des entêtes aux requêtes SIP du capteur.
- Lors d'une étape 314, le serveur 112 de référencement génère un document XML identifiant les informations spécifiques du capteur. Ce document est stocké dans une base XML du serveur 128 dédié.

Parallèlement à ces opérations propres à un capteur, le serveur 112 de référencement peut effectuer des opérations similaires pour des groupes de capteurs. Par exemple :
- Lors d'une étape 316, le serveur de référencement s'inscrit auprès d'un groupe de capteurs - par exemple les capteurs thermiques enregistrés dans le serveur de présence,
- Lors d'une étape 318, le serveur 112 de référencement s'inscrit auprès d'un groupe de capteurs - par exemple les capteurs thermiques enregistrés dans le serveur 120 d'inscription, pour surveiller le de-registration et le changement de paramètres des capteurs.
- Lors d'une étape 320, le serveur de référencement génère un groupe de documents XML identifiant les informations spécifiques des capteurs du groupe. Ce document est stocké dans une base XML stockée dans le serveur 128 dédié.

L'invention est susceptible de nombreuses variantes. Par exemple, dans cette réalisation, une base 124 (figure 1) HSS, pour « Home Subscriber Server » en anglais, est utilisée comme base de stockage des données d'utilisateurs et de services auxquels ces utilisateurs ont souscrit. Les principales données stockées sont: les identités de l'usager, les informations d'enregistrement, les paramètres d'accès et les informations permettant d'appeler des services de l'usager.

## Revendications

1. Procédé de référencement de capteurs (116) connectés à un réseau (110) de télécommunication utilisant un protocole du type IMS, la connexion au réseau (110) requérant la transmission d'une requête (118) d'accès devant être validée par un serveur d'inscription (120), **caractérisé en ce que** la requête (118) d'accès émise par un capteur (116) pour sa connexion au réseau (110) comprend des informations spécifiques codant un identifiant, une localisation et une fonction du capteur (116) de telle sorte que le serveur d'inscription (120) commande le référencement de ce capteur (116) à partir de cet identifiant, de cette localisation et de cette fonction lors de la validation de la connexion du capteur (116) au réseau (110).

2. Procédé selon la revendication 1 **caractérisé en ce que** la requête (118) d'accès émise par le capteur (116) code l'identifiant, la localisation et la fonction du capteur (116) au moyen d'un entête spécifique intégré dans la requête (118) d'accès du capteur (116).

3. Procédé selon la revendication 1 ou 2 **caractérisé en ce que** le serveur (120) d'inscription commande le référencement du capteur (116) en intégrant les informations spécifiques, identifiant le capteur, sa localisation et sa fonction, dans une requête (204) destinée à un serveur (112) de référencement qui gère une liste (114) des capteurs connectés au réseau (110).

4. Procédé selon la revendication 3 **caractérisé en ce que** le serveur (112) de référencement transmet la liste (114) des capteurs (116) connectés au réseau (110) à une base (128) de données publique.

5. Procédé selon l'une des revendications 3 ou 4 **caractérisé en ce que** le serveur d'inscription (120) valide la connexion du capteur (116) au réseau lorsque le serveur (112) de référencement valide le référencement du capteur (116).

6. Procédé selon l'une des revendications précédentes **caractérisé en ce qu'**un serveur (122) de présence contrôle le maintien de la connexion d'un terminal au réseau, un capteur (116) étant supprimé de la liste de référencement (114) si le serveur de présence (122) détecte sa déconnexion.

7. Procédé selon l'une des revendications précédentes **caractérisé en ce que** la localisation d'un capteur (116) est effectuée au moyen de sa latitude et de sa longitude.

8. Capteur (116) comprenant des moyens pour émettre une requête (118) d'inscription dans un réseau du type IMS codant sa fonction et sa localisation selon un procédé conforme à l'une des revendications précédentes.

9. Serveur (120) d'inscription à un réseau (110) de télécommunication du type IMS destiné à recevoir des requêtes (118) d'accès transmises par des terminaux (116) requérant une connexion au réseau **caractérisé en ce qu'**il comprend des moyens pour identifier dans une requête d'accès émise par un capteur des informations spécifiques codant un identifiant, une localisation et une fonction de ce capteur (116) afin de commander le référencement du capteur (116) selon un procédé conforme à l'une des revendications 1 à 7.

10. Serveur (112) de référencement de capteurs (116) d'un réseau (110) de télécommunication du type IMS comprenant des moyens pour recevoir une commande (204) de référencement générées par un serveur (120) d'inscription selon un procédé conforme à l'une des revendications 1 à 7.
